# EUROPEAN PATENT APPLICATION

(11) **EP 2 963 286 A1**
(43) Date of publication of application: **06.01.2016**
(21) Application number: 15174224.4
(22) Date of filing: 29.06.2015
(51) Int. Cl.: F03D 7/02

(54) **WINDTURBINE AND METHOD FOR STOPPING THE SAME**

(30) Priority: 03.07.2014 JP 2014137392
(71) Applicant: Hitachi, Ltd., Tokyo 100-8280 (JP)
(72) Inventor: TOBINAGA, Ikuo, Chiyoda-ku,, Tokyo 100-8280, (JP); KIYOKI, Souichiro, Chiyoda-ku,, Tokyo 100-8280, (JP)
(74) Representative: Calderbank, Thomas Roger

(57) **Abstract**

With a windturbine that can independently vary pitch angles of blades, to provide the windturbine and a method for stopping the windturbine that can reduce an unbalance in force possibly generated in an out-of-plane direction of a rotor of the windturbine in a process of stopping the windturbine to stop the windturbine with one stuck blade.

When stopping the windturbine with one stuck blade, a pitch angle of a normal blade is changed in a direction of larger inflow angle to cause the blade to be in a state of feather (finally, a trailing edge of the blade locates at a windward) (negative feather). When stopping the windturbine, if the pitch angle of the blade (or a state quantity having a correlation relationship with the pitch angle, such as a wind velocity) exceeds a predetermined value, the pitch angle of the normal blade is changed in a direction of smaller inflow angle instead of the negative feather. Thus, the blade enters the state of feather (finally, the trailing edge of the blade locates at a leeward) through a state where the inflow angle is zero (positive feather).

## Description

The present invention relates to a windturbine and a method for stopping the windturbine. In particular, the present invention relates to the windturbine and the method for stopping the windturbine that can independently vary respective pitch angles of a plurality of blades.

Nowadays, windturbines (wind turbine generators) have gathered attention as an environmentally friendly and low-risk method for generating electricity. Meanwhile, the electric generation cost is high; therefore, further cost reduction while ensuring the safety has been demanded. Conventionally, for example, as disclosed in Japanese Unexamined Patent Application Publications No. 2006-336505, No. 2007-64062, and No. 2007-16628, it has been proposed that the pitch angles and the yaw angle are controlled to devise a standby mode during a windstorm, thus reducing a design load for storm.

### [Citation List]

[Patent Literature 1] JP 2006-336505 A
[Patent Literature 2] JP 2007-064062 A
[Patent Literature 3] JP 2007-016628 A

Conventionally, the reduction in the design load has been examined by devising the standby mode or a similar mode during windstorm. However, when stopping the windturbine due to various causes, the reductions in a load and an unbalanced load applied to the windturbine (in particular, the blades) in the process of stopping the windturbine are not especially considered. That is, conventionally, to stop the windturbine, the pitch angles of the blades are controlled such that the blades enter a state of feather. The blade is turned (the pitch angle is changed) in a direction of smaller relative inflow angle (relative inflow angle of a wind flown into the blade, hereinafter simply referred to as an inflow angle). Through the state where the inflow angle is zero, the blades are finally set to enter the state of feather (The trailing edge of the blade finally locates at a leeward). Thus, the pitch angle is controlled.

Now, with a windturbine that independently performs a pitch angle control (independent pitch control) on the respective blades, if the angle of one blade has become immobilized (locked or stuck) during operation and this causes a failure, the windturbine performs a stop operation. In this case as well, conventionally, a usual feather operation (the feather operation that changes or varies the pitch angle into the direction of smaller relative inflow angle) of the blade that has not become immobilized (normal blade) stops the windturbine.

However, examinations by the inventors have found the following. If one blade has become immobilized during operation, to stop the windturbine, if the windturbine is stopped by the usual feather operation, the windturbine becomes unbalanced in force in an out-of-plane (rotor plane) direction of the windturbine, placing the windturbine in a hazardous state. Although the details will be described later, the outlines are as follows. The immobilized blade does not move from the blade pitch angle at the time of operation. Accordingly, the immobilized blade keeps generating a fluid force to the leeward while the normal blades are turned in the feather direction (the pitch angle of the normal blades is changed in the feather direction). Therefore, the fluid force is generated by the normal blades to the windward to stop the windturbine. This makes the entire rotor unbalanced in force in the out-of-plane (rotor plane) direction. This possibly places the windturbine in the hazardous state.

With the windturbine that can independently vary pitch angles of blades, the preferred aim of the present invention is to provide a windturbine and a method for stopping the windturbine that can reduce an unbalance in force possibly generated in an out-of-plane direction of a rotor of the windturbine in a process of stopping the windturbine to stop the windturbine in which some (for example, one) of blades is immobilized.

The present invention may be configured as follows. When stopping a windturbine in which some (for example, one) of blades is immobilized, a pitch angle of a normal blade (blade that has not become immobilized) is changed in a direction of larger inflow angle to cause the blade to be in a state of feather (finally, a trailing edge of the blade locates at a windward).

This description designates the control of the pitch angle that turns the blade or changes the pitch angle of the blade in the direction of larger inflow angle to place the blade in the state of feather and causes the trailing edge of the blade to locate at the windward as a negative feather. This description designates the usual feather operation, that is, the control of the pitch angle that turns the blade or changes the pitch angle in the direction of smaller inflow angle to place the blade in the state of feather through the state of the inflow angle being zero and causes the trailing edge of the blade to locate at the leeward as a positive feather.

The present invention may be also configured as follows. When stopping the windturbine, if the pitch angle of the blade (or a state quantity having a correlation relationship with the pitch angle, such as a wind velocity) exceeds a predetermined value, the normal blade is set to be not a negative feather but a positive feather.

Additionally, the present invention is preferable to be a downwind windturbine.

To stop the windturbine in which some (for example, one) of the blades is immobilized, the present invention can reduce an unbalance in force possibly generated in the out-of-plane (rotor plane) direction of the windturbine in the process of stopping the windturbine. The problem, configuration, and effect other than those described above are clarified by the description of the following embodiments.

In the drawings:
Fig. 1 is a drawing illustrating a configuration of devices and controlled objects of a windturbine to which the present invention is applied;
Fig. 2 includes explanatory views of a fluid force acting on a blade and an entire rotor in the case where a positive feather is performed on an upwind windturbine during stop with one stuck blade;
Fig. 3 includes explanatory views of a fluid force acting on the blade and the entire rotor in the case where a negative feather is performed on the upwind windturbine during stop with one stuck blade;
Fig. 4 includes explanatory views of a direction in which the fluid force acting on the blade is generated;
Fig. 5 is an explanatory view of the fluid force acting on the blade and the entire rotor in the case where the negative feather is performed on the downwind windturbine during stop with one stuck blade;
Fig. 6 is a drawing illustrating a control block of a first embodiment of the present invention;
Fig. 7 includes explanatory views of the fluid force acting on the blade in the negative feather;
Fig. 8 includes explanatory views of proper uses of the negative feather and the positive feather;
Fig. 9 is a drawing illustrating a control block of a second embodiment of the present invention;
Fig. 10 is a drawing illustrating a control block of a third embodiment of the present invention; and
Fig. 11 is a drawing illustrating a control block of a fourth embodiment of the present invention.

The following describes embodiments of the present invention using the drawings.

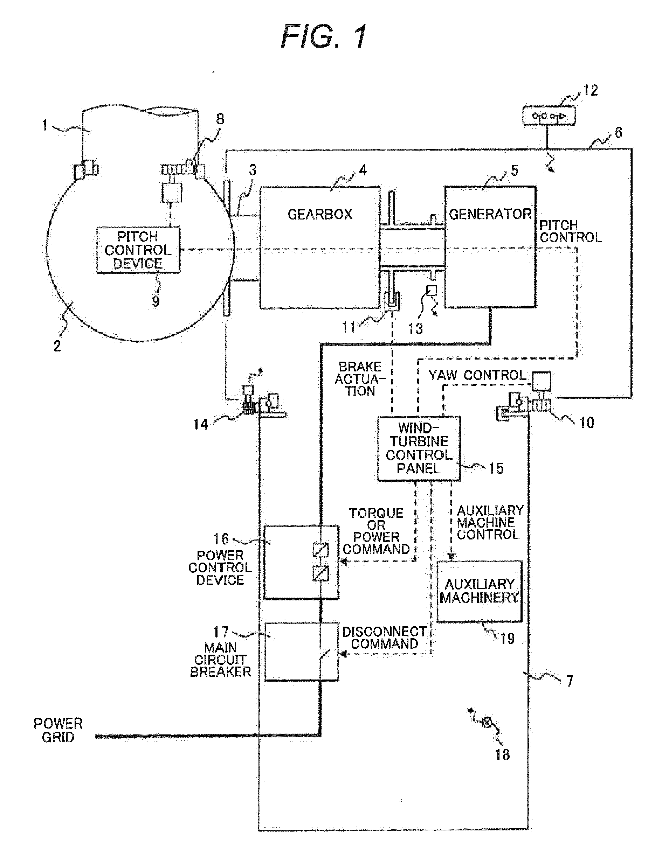

First, using Fig. 1, the following describes an exemplary configuration of devices and controlled objects of a windturbine to which the present invention is applied. A large-size wind turbine generator (rated output: 100 kW or more) to which the present invention is applied basically performs an unpeopled, automatic operation. The large-size wind turbine generator connects to a power grid to which the generated electric power is supplied. The windturbine includes a plurality of blades 1, a hub 2, a main shaft 3, a gearbox 4, an electric generator 5, a nacelle 6, and a tower 7. The blade 1 is installed to the hub 2. The main shaft 3 is coupled to the hub 2. The gearbox 4 accelerates the rotation of the main shaft 3. The electric generator 5 is coupled to the gearbox 4 and generates electricity. The nacelle 6 rotatably supports the main shaft 3 and houses the gearbox 4 and the electric generator 5. The tower 7 rotatably supports the nacelle 6. The windturbine also includes a wind vane and anemometer 12, a rotation rate sensor 13, a yaw angle sensor 14, or a similar sensor. The rotation rate sensor 13 measures the rotation rate of the electric generator 5. The yaw angle sensor 14 measures the yaw angle of the nacelle 6. Outputs from these sensors are transmitted to a windturbine control panel 15 installed in the tower 7. The windturbine control panel 15 controls a controlled object in the windturbine based on a control command from the outside and the output from the respective sensors to perform the unpeopled, automatic operation of the windturbine. The controlled object is a pitch control device 9 (pitch drive mechanism 8), a yaw drive mechanism 10, an electric power control device 16, a main circuit breaker 17, an auxiliary machine group 19 (The auxiliary machine includes, for example, a rotor brake 11, a hydraulic pressure unit and a cooling unit, which are not illustrated.), and a similar device. The pitch control device 9 (pitch drive mechanism 8) changes the pitch angle of the blade 1. The yaw drive mechanism 10 changes the direction of the entire nacelle 6. The electric power control device 16 adjusts the electric power (or a rotating torque) of the windturbine. The main circuit breaker 17 plays a role in electrical coupling with the system. The windturbine monitors the state of the respective units by the respective sensors. When the windturbine control panel 15 senses a failure or when a windturbine operator performs a manual operation (presses an emergency stop button 18 to perform a stop command on the windturbine control panel 15), the electric generation is aborted and the stop operation is performed. The present invention assumes the case where the blade has become immobilized (locked or stuck) as the failure.

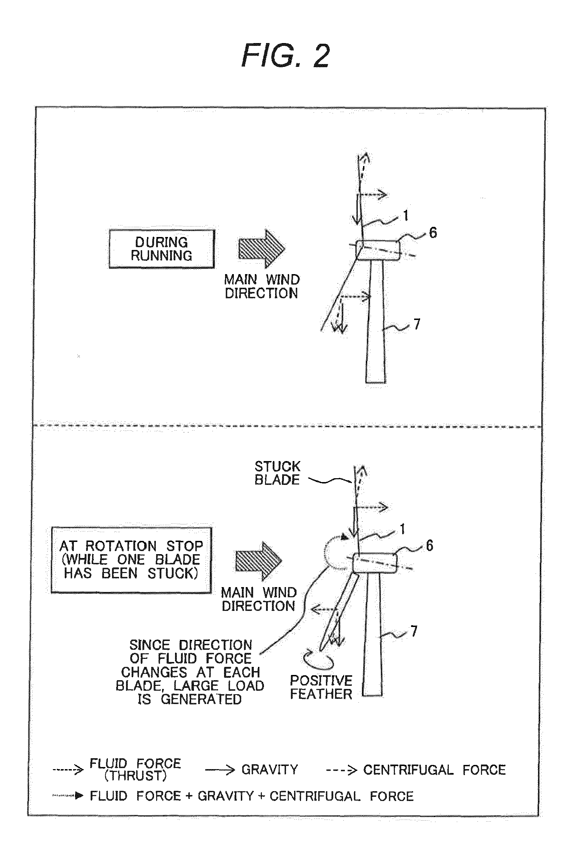

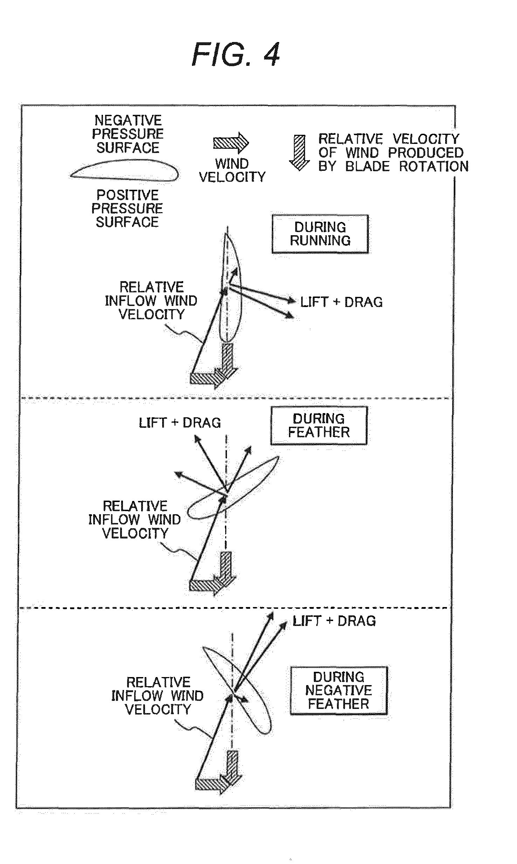

Next, the following describes a circumstance of coming at the present invention in detail using Fig. 2 to Fig. 5, Fig. 7, and Fig. 8. As described later, although the present invention is appropriate for the downwind windturbines, the following describes with an example of a situation of the fluid force acting on the blades during stop of the windturbine of the upwind windturbine. Operations are performed with a pitch angle at which a lift is generated on the blade on a negative pressure surface side during the operation (see "During running" in Fig. 4). At this time, a fluid force (thrust) is generated in a leeward direction (see "During running" in Fig. 2). During stop, in the usual feather operation, the pitch angle of the blade changes in a direction of smaller relative inflow angle between the blade and the wind. A brake is applied such that the lift is generated on a positive pressure surface side (see "During feather" in Fig. 4). At this time, the fluid force (thrust) is generated in the windward direction (see the blade in the positive feather in "At rotation stop" in Fig. 2).

When the windturbine performs the stop operation with one stuck blade, since the stuck blade does not move from the blade pitch angle during operation, the blade keeps generating the fluid force to the leeward. Meanwhile, since the pitch angles of the normal blades change in a feather direction, the blades generate the fluid force to the windward and then stop. As illustrated in Fig. 2, this makes the blades unbalanced in force in the out-of-rotor plane direction, placing the windturbine in the hazardous state.

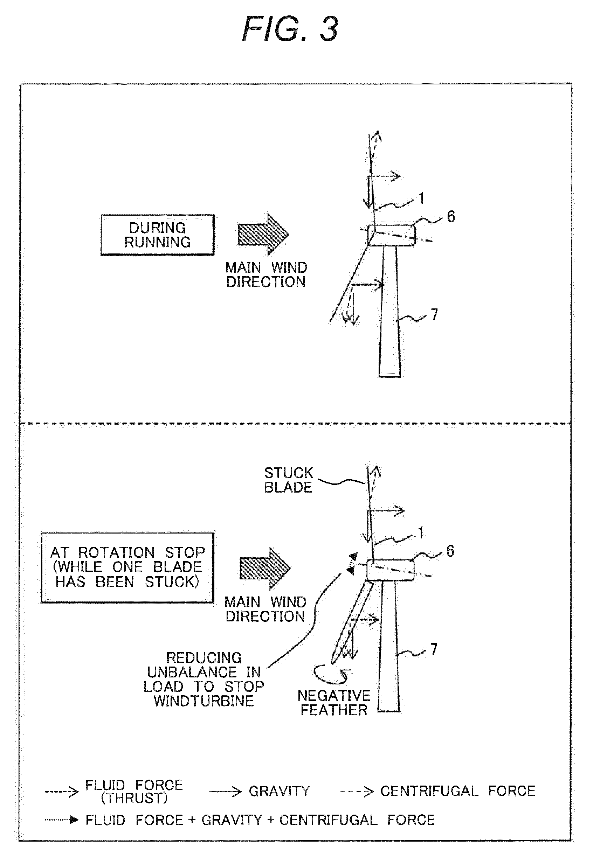

Therefore, to solve this problem, the present invention reverses the changing direction of the pitch angles of the normal blades (the turn direction of the normal blade for changing the pitch angle) while the windturbine stops, causing the blades to transition to the state of feather (negative feather). Using Fig. 3, the following describes the fluid force acting on the blades during this negative feather. The fluid force acting on the blades during operation of the windturbine is similar to Fig. 2.

To perform the stop operation of the windturbine with the one stuck blade, the negative feather is performed. The negative feather is the following method. The changing of the pitch angle in the direction of larger inflow angle stalls the blade and reduces the lift as illustrated in "During negative feather" in Fig. 4. Additionally, by increasing drag, the brake is applied while generating the fluid force in an out-of-plane direction to the leeward. Since the fluid force is generated in the out-of-plane direction to the leeward, at the blade on which the negative feather has been performed, the fluid force (thrust) faces the leeward as illustrated in Fig. 3. Accordingly, when the one blade has been stuck, the fluid force in the direction similar to the load to the leeward acting on the stuck blade is generated also on the normal blades, thus allowing stopping the windturbine. That is, the unbalance in force in the out-of-plane (rotor plane) direction while the windturbine stops can be reduced.

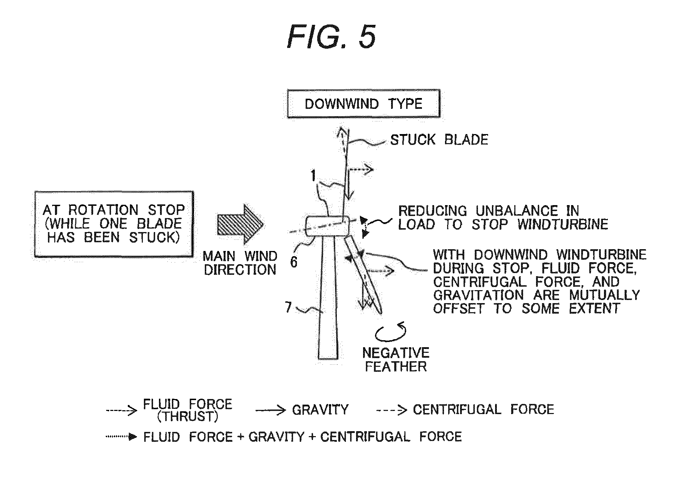

The above-described description describes the upwind windturbine as the example. However, the application of the present invention to the downwind windturbine provides an excellent effect. This following describes this using Fig. 3 and Fig. 5. At the blade, concurrently with the fluid force (thrust), a gravitation in a vertically downward direction and a centrifugal force in a direction of shallowing a cone angle are also generated concurrently. With the upwind windturbine, during the stop of the windturbine, at the normal blade on which the negative feather operation is performed, as illustrated in Fig. 3, vectors of loads exerted on the rotor in the out-of-plane (rotor plane) directions, which correspond to the fluid force (thrust), centrifugal force, and gravitation, are exerted on a same side of the rotor plane. In view of this, the load acting on the blades increases, disadvantageous in a structural design of the blades. On the other hand, with the downwind windturbine, as illustrated in Fig. 5, with the downwind windturbine as well, at the normal blade on which the negative feather operation is performed, fluid force similar to the fluid force acting on the normal blade of the upwind windturbine is generated, allowing reducing the unbalance in the load acting on the entire rotor. With the downwind windturbine, as illustrated in Fig. 5, the centrifugal force faces the out-of-plane direction reverse to the fluid force (thrust). Accordingly, these forces are mutually offset. Therefore, compared with the upwind windturbine, the downwind windturbine exhibits a smaller load acting on the blades, advantageous in the structural design of the blades. Additionally, the negative feather operation generates the load that bends the blade to the leeward. Meanwhile, in the case of the upwind windturbine, the blade is possibly in contact with the tower; therefore, a design of preventing the contact is required. By using the downwind windturbine, the leeward of the rotor is free from an obstacle. This is advantageous of preventing a problem of contact with the blade.

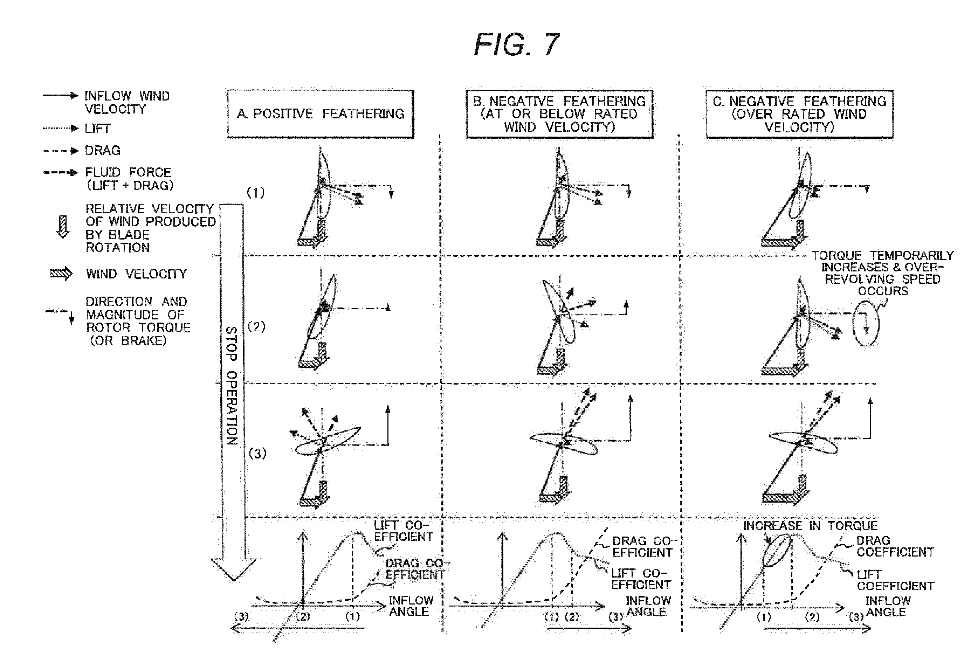

According to the examinations by the inventors, the above-described control of the negative feather has the following problem. The following describes the problem with reference to "C Negative feather (over rated wind velocity)" in Fig. 7. That is, the windturbine operates at the optimum pitch angle according to the wind velocity. However, in the case where the wind velocity exceeds the rated wind velocity of the windturbine, to keep an electric generation output constant, the pitch angle is changed to a feather side (side of smaller inflow angle) to reduce the fluid force. Thus, the operation is performed while releasing the wind. From this operating state of increasing the pitch angle, if the stop operation is performed by the negative feather, the fluid force temporarily increases (passes through a high center of lift) during the stop process, resulting in an increase in rotating torque. This phenomenon causes overspeeding in the stop operation of the windturbine.

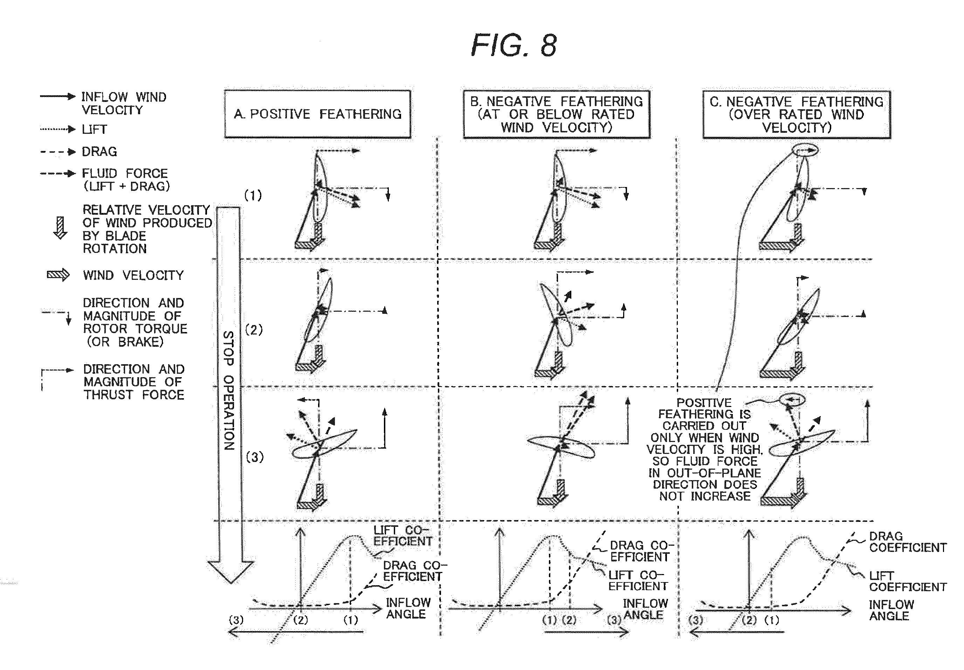

Therefore, the inventors have found a solution to this problem as follows. As illustrated in Fig. 8, in the operating state of the windturbine when stopping the windturbine, the controls of the negative feather and the positive feather are properly used on the normal blades. For example, the negative feather operation is performed on the shallow pitch angle. In the case of the pitch angle exceeding a predetermined value, a positive feather operation is performed. In the case where the wind velocity exceeds the rated wind velocity, as described above, the pitch angle is changed to the feather side (side of smaller inflow angle). The pitch angle is larger than the pitch angle when the wind velocity is equal to or less than the rated wind velocity. That is, at the wind velocity sufficiently higher than the rated wind velocity, as described above, the pitch angle is increased so as to release energy. The wind velocity changes by the position and also changes by the time. While it all depends, for example, the negative feather operation is performed at 0 to 7°, and the positive feather operation is performed at the excess of 7° depending on various conditions. In other words, near the rated wind velocity, the negative feather operation is performed. At the wind velocity sufficiently higher than the rated wind velocity (in the case where the problem of overspeeding becomes serious by performing the negative feather), the positive feather operation is performed.

In the case where the pitch angle exceeds a predetermined threshold (in the case where the pitch angle locates closer to the feather), the stop operation is performed by the positive feather. However, as illustrated in Fig. 8, since the stuck blade at the time also locates closer to the feather, the fluid force itself is restricted. In view of this, even if the positive feather is performed, the unbalance in the load acting on the entire rotor does not increase; therefore, this does not cause a problem.

The pitch angle is controlled considering the wind velocity and the rotation rate of the windturbine. That is, it can be said that the wind velocity and the rotation rate of the windturbine are state quantities having a correlation relationship with the pitch angle. Accordingly, the controls of the negative feather and the positive feather can be used properly indexing the wind velocity and the rotation rate of the windturbine, instead of the pitch angle.

Whether the blade has been stuck or not is, for example, determined by measuring the pitch angles of the respective blades and comparing the pitch angles with the command values of the respective pitch angles. Thus, whether the blade has been stuck or not is determined.

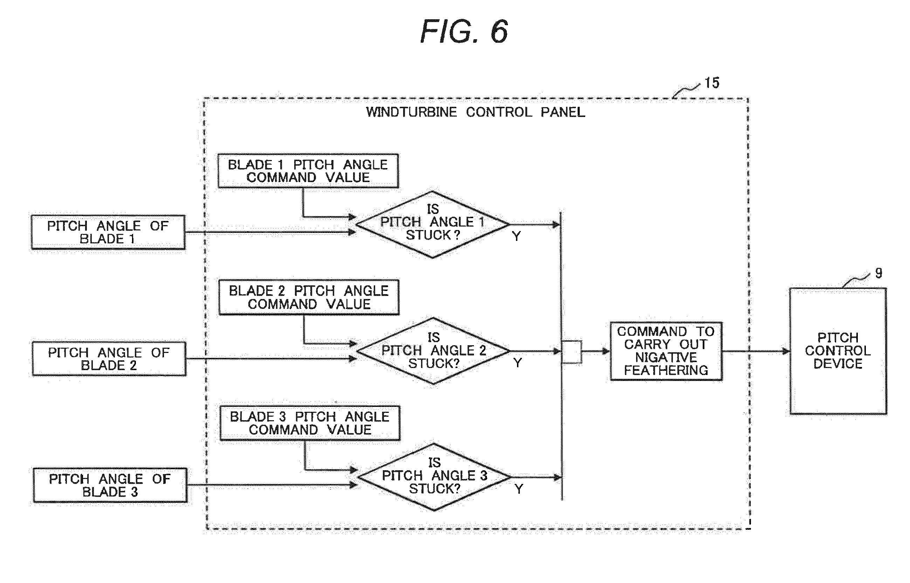

Next, the following describes a method for controlling the pitch angle of the present invention using the control block diagrams illustrated in Fig. 6 and Figs. 9 to 11.

### [First Embodiment]

Fig. 6 illustrates a control block diagram of this embodiment. This embodiment premises a windturbine having three blades. The pitch angles of the respective blades are measured and the pitch angles are compared with the command values of the respective pitch angles. Thus, whether the blade has been stuck or not is determined. If any of the blades has been stuck, the stop operation is performed on the windturbine. This stop operation of the windturbine is, as described above, performed by the negative feather. The windturbine control panel 15 outputs a stop command by the negative feather to the pitch control device 9.

### [Second Embodiment]

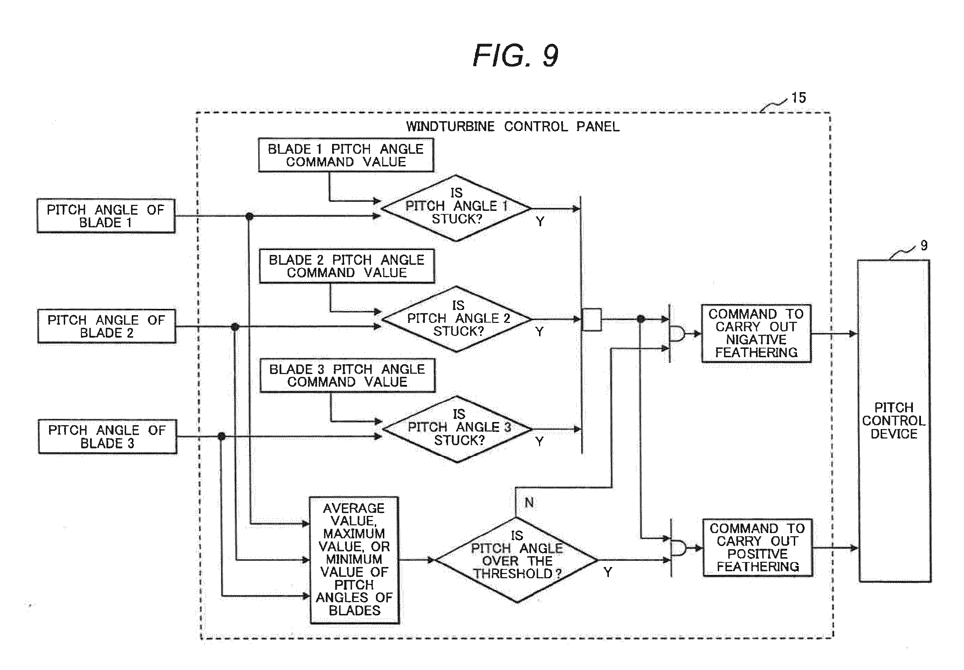

Fig. 9 illustrates a control block diagram of this embodiment. This embodiment determines the proper use of the negative feather and the positive feather to stop the windturbine by whether the pitch angles of the blades exceed a predetermined threshold or not. As the pitch angles serving as the index, the average value, the maximum value, or the minimum value of the pitch angles of the respective blades can be used. When detecting the stuck pitch angle, if any of these indexes exceed the threshold, a positive feather command is output. Meanwhile, if the any of these indexes are equal to or less than the threshold, a negative feather command is output.

### [Third Embodiment]

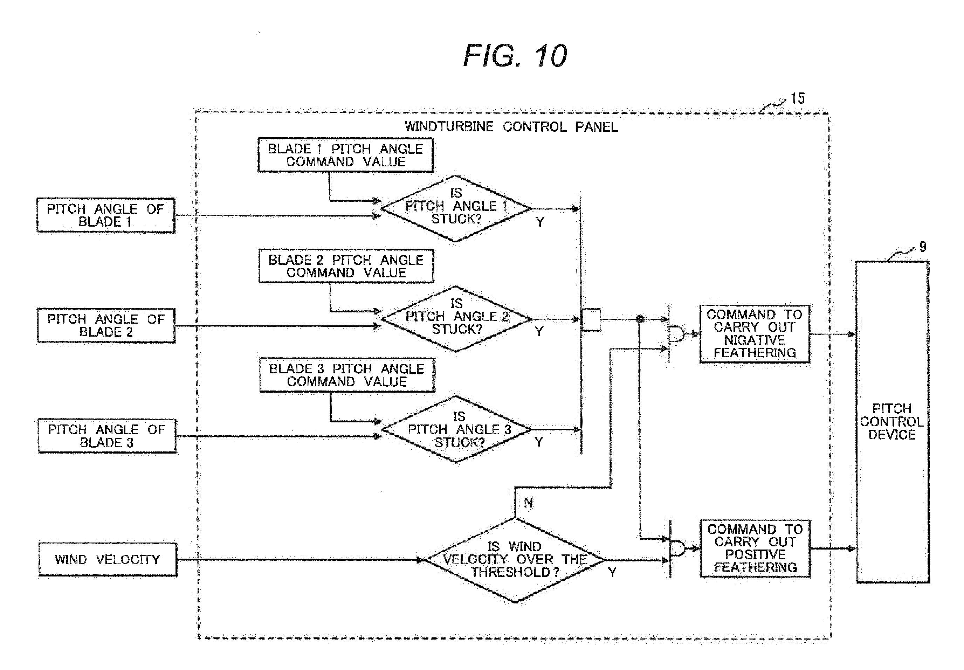

Fig. 10 illustrates a control block diagram of this embodiment. This embodiment indexes the wind velocity for determining the proper use of the negative feather and the positive feather to stop the windturbine, instead of the average pitch angle.

### [Fourth Embodiment]

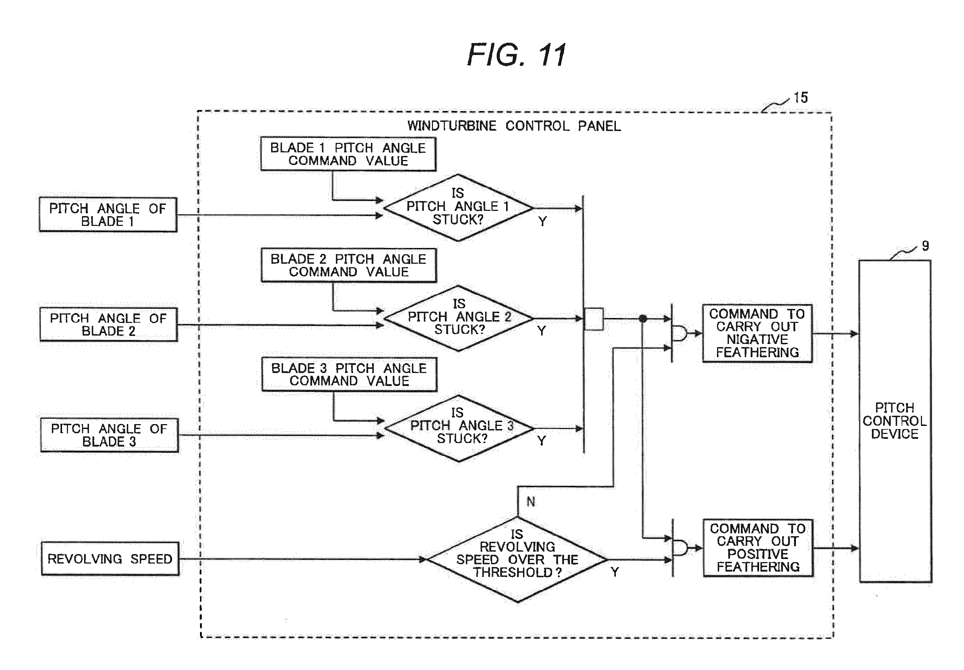

Fig. 11 illustrates a control block diagram of this embodiment. This embodiment indexes the rotation rate of the windturbine for determining the proper use of the negative feather and the positive feather to stop the windturbine, instead of the average pitch angle. In the case of the windturbine rotation rate, different from the wind velocity, a correlation relationship with the pitch angle is possibly weak. The windturbine rotation rate can be utilized effectively as the index in a windturbine where the rotation rate becomes a rated rotation rate at the pitch angle of, for example, approximately 7°.

The present invention is not limited to the above-described embodiments, and includes various modifications. For example, the above-described embodiments are described in detail for simply describing the present invention, and do not necessarily include all the described configurations. A part of the configurations of one embodiment can be replaced by the configuration of another embodiment. A part of the configurations of one embodiment can be used with the addition of the configuration of another embodiment. Regarding a part of the configurations in the respective embodiments, another configuration can be added, deleted, or replaced.

### [Reference Sign List]

- 1: blade
- 2: hub
- 3: main shaft
- 4: gearbox
- 5: electric generator
- 6: nacelle
- 7: tower
- 8: pitch drive mechanism
- 9: pitch control device
- 10: yaw drive mechanism
- 11: rotor brake
- 12: wind vane and anemometer
- 13: rotation rate sensor
- 14: yaw angle sensor
- 15: windturbine control panel
- 16: electric power control device
- 17: main circuit breaker
- 18: emergency stop button
- 19: auxiliary machine group

## Claims

1. A windturbine, comprising:
a plurality of blades (1) with independently controllable pitch angles: and
a control device (9, 15) configured to control the pitch angles,
**characterized in that**
wherein the control device (9, 15) is configured to control the pitch angle of a normal blade (1) so that the normal blade (1) is turned in a direction of larger inflow angle and is pitched to a feathering state when stopping the windturbine in a state where the plurality of blades (1) are partially stuck.

2. The windturbine according to claim 1,
wherein the control device (9, 15) is configured to determine a manner of feathering to stop the windturbine according to a determination index that is the pitch angle of the blade (1) or a state quantity having a correlation relationship with the pitch angle at the time of stopping the windturbine and control the pitch angle of the normal blade (1) so that the normal blade (1) are turned in a direction of smaller inflow angle and is pitched to the feathering state through a state where the inflow angle is zero if the pitch angle or the state quantity exceeds a predetermined value.

3. The windturbine according to claim 1,
wherein the windturbine is a downwind windturbine.

4. A method for stopping a windturbine provided with a plurality of blades (1) with independently controllable pitch angles, comprising the steps of:
determining whether the plurality of blades (1) is partially immobilized or not; and
carrying out a negative feathering by changing the pitch angle of a normal blade (1) in a direction of larger inflow angle to bring the normal blade (1) to a feathering state if the plurality of blades (1) is determined to be partially immobilized.

5. The method for stopping the windturbine according to claim 4, further comprising
measuring the respective pitch angles of the plurality of blades (1), and
wherein the determining step determines whether the blades (1) have become immobilized or not by comparing the measured pitch angles with command values of the respective pitch angles.

6. The method for stopping the windturbine according to claim 3, further comprising
another determining a manner of feathering to stop the windturbine according to a determination index that is the pitch angle of the blade (1) or a state quantity having a correlation relationship with the pitch angle at the timing of stopping the windturbine; and
carrying out a positive feathering by changing the pitch angle of the normal blade (1) in a direction of smaller inflow angle to bring the normal blades (1) to the feathering state through a state where the inflow angle is zero if the pitch angle or the state quantity is determined to exceed a predetermined value.

7. The method for stopping the windturbine according to claim 6, further comprising
selectively carrying out either the negative feathering or the positive feathering which is determined according the determination index that is an average value of the pitch angles of the plurality of blades (1).

8. The method for stopping the windturbine according to claim 6, further comprising
selectively carrying out either the negative feathering or the positive feathering which is determined according the determination index that is a maximum value of the pitch angles of the plurality of blades (1).

9. The method for stopping the windturbine according to claim 6, further comprising
selectively carrying out either the negative feathering or the positive feathering which is determined according the determination index that is a minimum value of the pitch angles of the plurality of blades (1).

10. The method for stopping the windturbine according to claim 6, further comprising
selectively carrying out either the negative feathering or the positive feathering which is determined according the determination index that is a wind velocity.

11. The method for stopping the windturbine according to claim 6, further comprising
selectively carrying out either the negative feathering or the positive feathering which is determined according the determination index that is a rotation rate of the windturbine.
